# EUROPÄISCHE PATENTSCHRIFT

(11) **EP 0 746 082 B1**
(45) Veröffentlichungstag und Bekanntmachung des Hinweises auf die Patenterteilung: **14.04.1999**
(21) Anmeldenummer: 96108821.8
(22) Anmeldetag: 03.06.1996
(51) Int. Cl.: H02K 9/22, H02K 9/06

(54) **Aussenläufermotor**
Outer rotor motor
Moteur à rotor extérieur

(30) Priorität: 02.06.1995 DE 29508875 U
(43) Veröffentlichungstag der Anmeldung: 04.12.1996
(73) Patentinhaber: PAPST-MOTOREN GmbH & Co. KG, 78106 St Georgen (DE)
(72) Erfinder: Reich, Harald, Dipl.-Ing., 78112 St. Georgen (DE); Schmider, Fritz, Ing. (grad.), 78132 Hornberg (DE)

(56) Entgegenhaltungen:
- DE-A- 2 741 529
- DE-A- 4 427 426
- GB-A- 2 065 986
- US-A- 5 394 040

## Beschreibung

Die Erfindung betrifft einen Außenläufermotor mit einem an einem wärmeleitenden Flansch wärmeleitend befestigten Innenstator und mit einem Außenrotor , welcher eine im wesentlichen ebene und glatte Oberfläche aufweist und mit einem wärmeleitend mit dem Flansch verbundenen Kühlkörper aus einem wärmeleitenden Material , der den Außenrotor mit geringem Abstand zumindest sektorweise umgibt.

Bekannte Elektromotoren dieser Art sind beispielsweise in den DE-Offenlegungsschriften 26 39 914 und 27 41 529 beschrieben. Durch am Rotorgehäuse angebrachte Lüfterschaufeln wird ein Kühlluftstrom (Zwangskühlung) erzeugt, der die Motorwärme in axialer Richtung abführt.

Es sind auch Motoren bekannt, die mittels eines auf der Motorwelle befestigten Lüfterrades einen erzwungenen Kühlluftstrom erzeugen, der durch die Motorwicklungen geführt wird und so für die Abfuhr der Motorwärme sorgt.

Die bekannten Außenläufermotoren weisen Kühleinrichtungen auf, die relativ aufwendig sind . Außerdem verursacht der durch den Innenraum geführte Zwangs-Luftstrom eine stärkere Verschmutzung der Motorwicklung . Die am Rotor angebrachten Lüfterschaufeln bzw. ein auf der Motorwelle angebrachtes Lüfterrad erzeugen zusätzliche Geräusche und Leistungsverluste.

Aufgabe der Erfindung ist es, die Kühlung von Außenläufermotoren zu vereinfachen bei gleichzeitiger Verminderung des Geräusches und Vermeidung von Leistungsverlusten.

Durch Anbringung eines Kühlkörpers am Motorflansch wird eine wirksame Kühlung, insbesondere bei hochtourigen Außenläufermotoren, erreicht.
Eine entsprechende Ausgestaltung des Kühlkörpers ermöglicht eine kostengünstige Herstellung, beispielsweise im Gußverfahren.

Eine weitere vorteilhafte Ausgestaltung ist Gegenstand des Anspruchs 10 . Damit können vorhandene Motoren , deren Kühlung unzureichend ist , auf relativ einfache Weise nachgerüstet werden .

Die gestellte Aufgabe wird durch die Merkmale der unabhängigen Ansprüche 1, 14 und 17 gelöst.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen.

Es zeigt:
- Fig. 1: eine Draufsicht eines erfindungsgemäßen Motors mit Kühlkörper,
- Fig. 2: eine Seitenansicht des Motors gemäß Fig. 1 mit Flansch und Kühlkörper im Schnitt,
- Fig. 3: eine Draufsicht auf ein zweites Ausführungsbeispiel eines erfindungsgemäßen Kühlkörpers mit Flansch,
- Fig. 4: eine Draufsicht auf ein drittes Ausführungsbeispiel eines erfindungsgemäßen Kühlkörpers mit Flansch,
- Fig. 5: eine Draufsicht eines weiteren Ausführungsbeispiels eines erfindungsgemäßen Motors mit angeschraubtem Kühlkörper und
- Fig. 6: eine Seitenansicht des Motors gemäß Fig. 5 mit Flansch und Kühlkörper mit Schnitt.

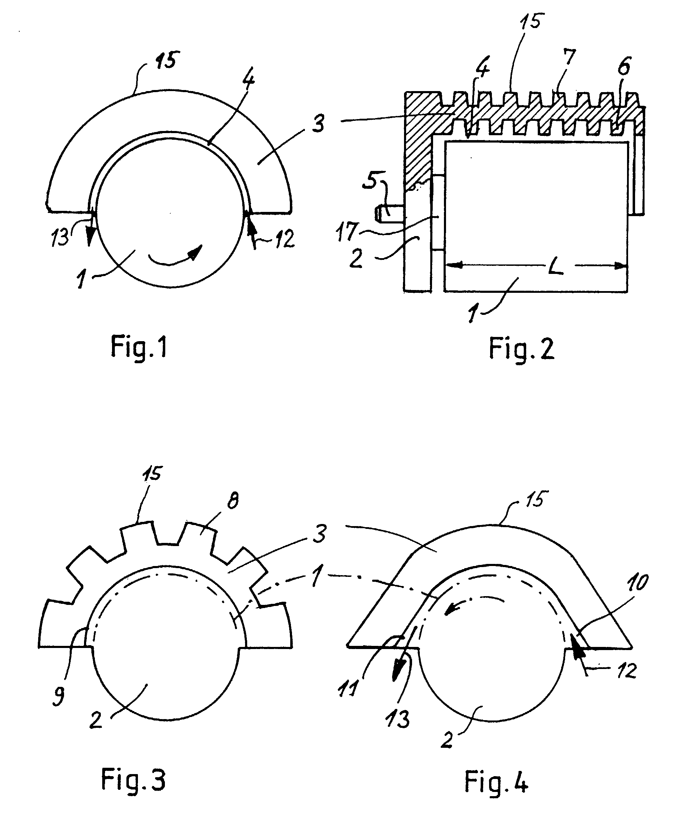

Fig. 1 und 2 zeigen einen Außenläufermotor mit einem Außenrotor 1, dessen Innenstator 17 in bekannter Weise an einem Flansch 2 befestigt ist. Eine Rotorwelle 5 ist in üblicher Weise gelagert und kann als Antriebswelle dienen. Ein einstückig mit dem Flansch 2 verbundener Kühlkörper 3 überdeckt, durch einen Luftspalt 4 vom Rotor 1 getrennt, den Rotor 1 in seiner axialen Länge L und am Umfang zumindest teilweise oder ganz. Der Luftspalt 4 liegt im Bereich von 0,4 bis 2 mm . Der Flansch 2 und der Kühlkörper 3 bestehen aus wärmeleitfähigem Material wie beispielsweise einer Leichtmetall-Legierung. Der in diesem Ausführungsbeispiel dargestellte Rotor 1 weist eine ebene, glatte und im wesentlichen zylindrische Umfangsfläche auf. Auch an der Oberfläche eines glattflächigen Rotors 1 wird in Umfangsrichtung Luft mitgerissen. Dieser Luftstrom wird ohne nennenswerten Leistungsmehraufwand zum Abtransport des vom Flansch 2 in den Kühlkörper 3 fließenden Wärmestroms genutzt . Der den Rotor 1 teilweise bis ganz umgebende Kühlkörper 3 ist ein Hohlzylinder oder ein ausgeschnittener Hohlzylinder mit glatter bis profilierter Oberflächenstruktur je nach Platzangebot und Herstellungsmethode. Der wärmeleitend mit dem Flansch 2 verbundene Kühlkörper 3 mit einer Außenfläche 15 umgibt die Peripherie des Außenrotors 1 in einem Bereich von etwa 10 bis 85 % , vorzugsweise 40 bis 60 % . Zur Vergrößerung der Kühlfläche ist in Fig. 2 eine innere und eine äußere Rippenstruktur mit Rippen 6 und 7 dargestellt, die in Umfangsrichtung verlaufen, d. h. für die inneren Rippen 6 in Richtung des bewegten, kühlenden Luftstroms, der durch den Rotor 1 erzeugt wird. Dieses Ausführungsbeispiel zeigt den Kühlkörper 3 als etwa halb ausgeschnittenen Holzylinder, der den Rotor 1 in seiner ganzen Länge L überdeckt. Diese Ausführung brachte überraschenderweise bei einem hochtourigen Außenläufermotor eine Verringerung der Motortemperatur um etwa 30° C.

Fig. 3 zeigt eine zweite Ausführungsform des Kühlkörpers 3 mit Flansch 2. Dieser Kühlkörper 3 weist zumindest an seiner Außenfläche 15 Längsrippen 8 auf. Die Innenfläche 9 kann glatt oder mit Rippen 6 (wie in Fig. 2) ausgeführt sein.

In Fig. 4 ist eine dritte Ausführungsform des Kühlkörpers mit Flansch 2 dargestellt, die eine verbesserte Führung des kühlenden Luftstroms zeigt. Dabei weist der Hohlzylinder des Kühlkörpers 3 eine Eintrittsöffnung 10 und eine Austrittsöffnung 11 auf, wobei der Ansaugbereich des Luftstroms mit dem Richtungspfeil 12 und der Ausblasbereich des Luftstroms mit dem Richtungspfeil 13 angedeutet sind. Auch bei dieser Ausführung können die Außenflächen glatt oder profiliert ausgeführt sein.

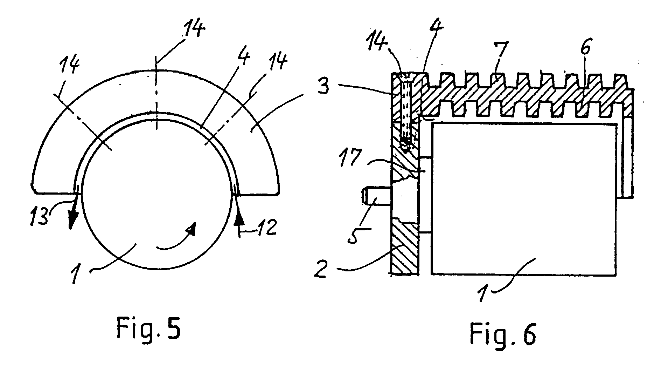

In Fig. 5 und 6 ist ein weiteres Ausführungsbeispiel gezeigt mit dem oben beschriebenen Kühlkörper 3, der beispielsweise mittels Schrauben 14 am Flansch 2 befestigt ist. Die Ausgestaltung der Außenflächen des Kühlkörpers kann wie oben beschrieben ausgeführt sein. Ebenso sind die entsprechenden Teile mit den gleichen Bezugszeichen wie in den vorbeschriebenen Figuren versehen.

Da die entstehende Motorwärme im wesentlichen über den mittels Luftstrom 12; 13 gekühlten Kühlkörper 3 abgeführt wird , ist der Einsatz des erfindungsgemäßen Motors auch dort von Vorteil , wo der Motorflansch 2 an nicht wärmeleitendem Material befestigt werden muß .

Je nach Ausführung des Kühlkörpers 3 dient dieser noch zusätzlich, zumindest teilweise, als Berührungsschutz. Ein Schutz gegen Fremdkörper ist dadurch gegeben, daß durch den Innenraum des Motors hindurch keine sog. Zwangskühlung erfolgt. Somit ist nach DIN ein Berührungs- und Fremdkörperschutz gegenüber bekannten Motoren dieser Art gegeben, d. h. die Schutzart wird zumindest teilweise verbessert.

## Patentansprüche

1. Außenläufermotor mit einem an einem wärmeleitenden Flansch (2) wärmeleitend befestigten Innenstator (17) ,
ferner mit einem Außenrotor (1) , welcher eine im wesentlichen ebene und glatte Oberfläche aufweist ,
und mit einem wärmeleitend mit dem Flansch (2) verbundenen Kühlkörper (3) aus einem wärmeleitenden Material, der den Außenrotor (1) mit geringem Abstand (4) zumindest sektorweise umgibt,
so daß der vom drehenden Außenrotor (1) durch diesen Abstand (4) hindurch transportierte Luftstrom (12; 13) Wärme vom Kühlkörper (3) und damit vom Flansch (2) und vom Innenstator (17) ableitet .

2. Außenläufermotor nach Anspruch 1, bei welchem der Abstand (4) zwischen Kühlkörper (3) und Rotor (1) mindestens 0,4 mm beträgt.

3. Außenläufermotor nach einem der Ansprüche 1 oder 2, bei welchem sich der Kühlkörper (3) um mindestens ein Viertel und bevorzugt mindestens die Hälfte des Umfangs des Rotors (1) erstreckt .

4. Außenläufermotor nach einem oder mehreren der vorangehenden Ansprüche, bei welchem sich der Kühlkörper (3) über die Hälfte und bevorzugt die gesamte axiale Länge (L) des Rotors (1) erstreckt.

5. Außenläufermotor nach einem oder mehreren der vorangehenden Ansprüche, bei welchem der Kühlkörper (3) auf seiner dem Außenrotor (1) zugewandten Seite mit Rippen (6) versehen ist.

6. Außenläufermotor nach Anspruch 5 , bei welchem sich die Rippen (6) in Umfangsrichtung erstrecken und Kanäle für die vom Außenrotor (1) mitgerissene Luft bilden.

7. Außenläufermotor nach einem oder mehreren der vorangehenden Ansprüche, bei welchem der Kühlkörper (3) auf seiner vom Außenrotor (1) abgewandten Seite mit Kühlrippen (7 ; 8) versehen ist.

8. Außenläufermotor nach Anspruch 7 , bei welchem die Kühlrippen (7 ; 8) in axialer Richtung verlaufen .

9. Außenläufermotor nach einem oder mehreren der vorangehenden Ansprüche, bei welchem sich der Abstand (4) zwischen Außenrotor (1) und Kühlkörper (3) im Bereich mindestens eines Umfangsendes (10 ; 11) des Kühlkörpers (3) erweitert .

10. Außenläufermotor nach einem oder mehreren der vorangehenden Ansprüche , bei welchem der Kühlkörper (3) am Flansch (2) befestigt ist .

11. Außenläufermotor nach einem oder mehreren der vorangehenden Ansprüche , bei welchem der Kühlkörper (3) einstückig mit dem Flansch (2) ausgebildet ist.

12. Außenläufermotor nach einem oder mehreren der vorangehenden Ansprüche , bei welchem der Außenrotor (1) im wesentlichen zylindrisch ausgebildet ist .

13. Außenläufermotor nach einem oder mehreren der vorangehenden Ansprüche , bei welchem der Außenrotor (1) zumindest an seinem dem Kühlkörper (5) gegenüberliegenden Abschnitt eine im wesentlichen glatte und ebene Oberfläche aufweist.

14. Außenläufermotor mit einem an einem wärmeleitenden Flansch (2) wärmeleitend befestigten Innenstator (17) ,
ferner mit einem Außenrotor (1),
und mit einem wärmeleitend mit dem Flansch (2) verbundenen wärmeleitenden Kühlkörper (3), der mindestens 10% , vorzugsweise 40 bis 60% der Peripherie des Außenrotors (1) unter Bildung eines mit einer Eintrittsöffnung (10) und einer Austrittsöffnung (11) versehenen Luftspalts (4) umgibt,
so daß die von der Peripherie des sich drehenden Außenrotors (1) durch die Eintrittsöffnung (10), den Luftspalt (4), und die Austrittsöffnung (11) transportierte Luft (12, 13) im Betrieb Wärme vom Kühlkörper (3), und über diesen vom Flansch (2) und vom Innenstator (17) ableitet.

15. Außenläufermotor nach Anspruch 14, bei welchem der zwischen Außenrotor (1) und Kühlkörper (3) gebildete Luftspalt (4) zumindest über einen Umfangsbereich hinweg einen konstanten Wert aufweist.

16. Außenläufermotor nach Anspruch 14 oder 15, bei welchem sich dieser Luftspalt (4) im Bereich seiner Eintrittsöffnung (10) und/oder seiner Austrittsöffnung (11) in Umfangsrichtung erweitert.

17. Außenläufermotor mit einem an einem wärmeleitenden Flansch (2) wärmeleitend befestigten Innenstator (17),
ferner mit einem Außenrotor (1),
und mit einem wärmeleitend mit dem Flansch (2) verbundenen wärmeleitenden Kühlkörper (3), der sich im wesentlichen über die gesamte axiale Erstreckung der Peripherie des Außenrotors (1), aber nur über einen Teil der Umfangserstreckung dieser Peripherie, unter Bildung eines Luftspalts (4) erstreckt, so daß die durch die rotierende Peripherie des sich drehenden Außenrotors (1) von einem zwischen der Peripherie des Außenrotors (1) und dem Kühlkörper (3) gelegenen Einlaß (10) durch diesen Luftspalt (4) zu einem zwischen der Peripherie des Außenrotors (1) und dem Kühlkörper (3) gelegenen Auslaß (11) transportierte Luft (12, 13) Wärme vom Kühlkörper (3), und über diesen vom Flansch (2) und vom Innenstator (17) ableitet.

18. Außenläufermotor nach einem oder mehreren der Ansprüche 14 bis 17, bei welchem die dem Luftspalt (4) zugewandte Seite des Kühlkörpers (3) mit im wesentlichen in Umfangsrichtung verlaufenden Kanälen versehen ist.

19. Außenläufermotor nach einem oder mehreren der Ansprüche 14 bis 18, bei welchem die Peripherie des Außenrotors (1) im wesentlichen glatt ausgebildet ist.

20. Außenläufermotor nach einem oder mehreren der vorhergehenden Ansprüche, welcher als elektronisch kommutierter Motor ausgebildet ist, wobei sein Außenrotor (1) eine Rotorglocke und eine an deren Innenseite befestigte Dauermagnetanordnung aufweist.

21. Außenläufermotor nach Anspruch 20, bei welchem die Rotorglocke des Außenrotors (1) als tiefgezogenes Teil mit einer im wesentlichen ebenen und glatten Peripherie ausgebildet ist,
und sich der Kühlkörper (3) im wesentlichen parallel zu dieser Peripherie, und durch einen kleinen Luftspalt (4) von ihr getrennt, erstreckt.

22. Außenläufermotor nach einem oder mehreren der Ansprüche 14 bis 21, bei welchem der Einlaß bzw. die Eintrittsöffnung (10) so ausgebildet ist, daß ein Eintritt der Luft (12) in den zwischen Kühlkörper (3) und Außenrotor (1) gebildeten Luftspalt (4) etwa tangential zur Peripherie des Außenrotors (1) und in dessen Umfangsrichtung (bei Rotation) möglich ist.

23. Außenläufermotor nach einem oder mehreren der Ansprüche 14 bis 22, bei welchem der Auslaß bzw. die Austrittsöffnung (11) so ausgebildet ist, daß ein Austritt der Luft (13) aus dem zwischen Kühlkörper (3) und Außenrotor (1) gebildeten Luftspalt (4) etwa tangential zur Peripherie des Außenrotors (1) und in dessen Umfangsrichtung (bei Rotation) möglich ist.

## Claims

1. External rotor motor with an internal stator (17) secured heat-conductingly to a heat-conducting flange (2), and with an external rotor (1) which exhibits an essentially flat and smooth surface, and with a cooling element (3) which is connected heat-conductingly to the flange (2) and made of a heat-conducting material and surrounds the external rotor (1) with a small gap (4) at least in sectors, so that the stream of air (12; 13) transported through this gap (4) by the rotating external rotor (1) removes heat from the cooling element (3) and hence from the flange (2) and from the internal stator (17).

2. External rotor motor according to claim 1, in which the gap (4) between the cooling element (3) and the rotor (1) is at least 0.4 mm.

3. External rotor motor according to one of claims 1 or 2, in which the cooling element (3) extends over at least a quarter and preferably at least a half of the circumference of the rotor (1).

4. External rotor motor according to one or more of the preceding claims, in which the cooling element (3) extends over half and preferably over the entire axial length (L) of the rotor (1).

5. External rotor motor according to one or more of the preceding claims, in which the cooling element (3) is provided with fins (6) on its side facing the external rotor (1).

6. External rotor motor according to claim 5, in which the fins (6) extend in the circumferential direction and form channels for the air entrained by the external rotor (1).

7. External rotor motor according to one or more of the preceding claims, in which the cooling element (3) is provided with cooling fins (7; 8) on its side facing away from the external rotor (1).

8. External rotor motor according to claim 7, in which the cooling fins (7; 8) run in the axial direction.

9. External rotor motor according to one or more of the preceding claims, in which the gap (4) between the external rotor (1) and the cooling element (3) widens in the area of at least one circumferential end (10; 11) of the cooling element (3).

10. External rotor motor according to one or more of the preceding claims, in which the cooling element (3) is secured to the flange (2).

11. External rotor motor according to one or more of the preceding claims, in which the cooling element (3) is made in one piece with the flange (2).

12. External rotor motor according to one or more of the preceding claims, in which the external rotor (1) is essentially cylindrical.

13. External rotor motor according to one or more of the preceding claims, in which the external rotor (1) exhibits an essentially smooth and flat surface at least in its section lying opposite the cooling element (5).

14. External rotor motor with an internal stator (17) secured heat-conductingly to a heat-conducting flange (2), and with an external rotor (1), and with a heat-conducting cooling element (3) which is connected heat-conductingly to the flange (2) and surrounds at least 10%, preferably 40 to 60% of the periphery of the external rotor (1) forming an air gap (4) provided with an inlet opening (10) and an outlet opening (11), so that when in operation the air (12, 13) conveyed by the periphery of the rotating external rotor (1) through the inlet opening (10), the air gap (4) and the outlet opening (11) removes heat from the cooling element (3) and through this from the flange (2) and from the internal stator (17).

15. External rotor motor according to claim 14, in which the air gap (4) formed between the external rotor (1) and the cooling element (3) exhibits a constant value at least over a circumferential area.

16. External rotor motor according to claim 14 or 15, in which this air gap (4) widens in the circumferential direction in the area of its inlet opening (10) and/or its outlet opening (11).

17. External rotor motor with an internal stator (17) secured heat-conductingly to a heat-conducting flange (2), and with an external rotor (1), and with a heat-conducting cooling element (3) which is connected heat-conductingly to the flange (2) and essentially extends over the entire axial extension of the periphery of the external rotor (1) but only over a part of the circumferential extension of this periphery, forming an air gap (4), so that the air (12, 13) conveyed by the rotating periphery of the rotating external rotor (1) from an inlet (10) located between the periphery of the external rotor (1) and the cooling element (3) through this air gap (4) to an outlet (11) located between the periphery of the external rotor (1) and the cooling element (3) removes heat from the cooling element (3) and through this from the flange (2) and from the internal stator (17).

18. External rotor motor according to one or more of claims 14 to 17, in which the side of the cooling element (3) facing the air gap (4) is provided with channels running essentially in the circumferential direction.

19. External rotor motor according to one or more of claims 14 to 18, in which the periphery of the external rotor (1) is essentially smooth.

20. External rotor motor according to one or more of the preceding claims, which is embodied as an electronically commutated motor, whereby its external rotor (1) exhibits a rotor bell housing and a permanent magnet arrangement secured to its inside.

21. External rotor motor according to claim 20, in which the rotor bell housing of the external rotor (1) takes the form of a deep-drawn part with an essentially flat and smooth periphery, and the cooling element (3) extends essentially parallel to this periphery, separated from it by a small air gap (4).

22. External rotor motor according to one or more of claims 14 to 21, in which the inlet or the inlet opening (10) is embodied so that the air (12) can enter the air gap (4) formed between the cooling element (3) and the external rotor (1) roughly tangential to the periphery of the external rotor (1) and in its circumferential direction (when rotating).

23. External rotor motor according to one or more of claims 14 to 22, in which the outlet or the outlet opening (11) is embodied so that the air (13) can emerge from the air gap (4) formed between the cooling element (3) and the external rotor (1) roughly tangentially to the periphery of the external rotor (1) and in its circumferential direction (when rotating).

## Revendications

1. Moteur à induit extérieur comportant un stator intérieur (17) fixé de façon à conduire la chaleur à une bride thermoconductrice (2), comportant en outre un rotor extérieur (1) qui présente une surface pour l'essentiel plane et lisse, et comportant un corps de refroidissement (3) fabriqué dans un matériau thermoconducteur relié à la bride (2) de façon à conduire la chaleur, qui entoure le rotor extérieur (1) avec un faible espacement (4) au moins de façon sectorielle, de telle sorte que le courant d'air (12 ; 13) transporté à travers cet espacement (4) par le rotor extérieur en rotation (1) conduit la chaleur provenant du corps de refroidissement (3) et de ce fait de la bride (2) et du stator intérieur (17).

2. Moteur à induit extérieur selon la revendication 1, dans lequel l'espacement (4) entre le corps de refroidissement (3) et le rotor (1) est d'au moins 0,4 mm.

3. Moteur à induit extérieur selon l'une des revendications 1 ou 2, dans lequel le corps de refroidissement (3) s'étend sur au moins un quart et, de préférence, au moins la moitié de la circonférence du rotor (1).

4. Moteur à induit extérieur selon une ou plusieurs des revendications précédentes, dans lequel le corps de refroidissement (3) s'étend sur la moitié et, de préférence, sur toute la longueur axiale (L) du rotor (1).

5. Moteur à induit extérieur selon une ou plusieurs des revendications précédentes, dans lequel le corps de refroidissement (3) est pourvu d'ailettes (6) sur son côté orienté vers le rotor extérieur (1).

6. Moteur à induit extérieur selon la revendication 5, dans lequel les ailettes (6) s'étendent dans la direction périphérique et forment des canaux pour l'air entraîné par le rotor extérieur (1).

7. Moteur à induit extérieur selon une ou plusieurs des revendications précédentes, dans lequel le corps de refroidissement (3) est pourvu d'ailettes de refroidissement (7 ; 8) sur son côté opposé au rotor extérieur (1).

8. Moteur à induit extérieur selon la revendication 7, dans lequel les ailettes de refroidissement (7 ; 8) s'étendent dans la direction axiale.

9. Moteur à induit extérieur selon une ou plusieurs des revendications précédentes, dans lequel l'espacement (4) entre le rotor extérieur (1) et le corps de refroidissement (3) s'élargit dans la zone d'au moins une extrémité périphérique (10 ; 11) du corps de refroidissement (3).

10. Moteur à induit extérieur selon une ou plusieurs des revendications précédentes, dans lequel le corps de refroidissement (3) est fixé à la bride (2).

11. Moteur à induit extérieur selon une ou plusieurs des revendications précédentes, dans lequel le corps de refroidissement (3) est conçu de façon à faire partie intégrante de la bride (2).

12. Moteur à induit extérieur selon une ou plusieurs des revendications précédentes, dans lequel le rotor extérieur (1) est pour l'essentiel conçu de façon cylindrique.

13. Moteur à induit extérieur selon une ou plusieurs des revendications précédentes, dans lequel le rotor extérieur (1) présente au moins sur son segment faisant face au corps de refroidissement (3) une surface pour l'essentiel plane et lisse.

14. Moteur à induit extérieur comportant un stator intérieur (17) fixé de façon à conduire la chaleur à une bride thermoconductrice (2), comportant en outre un rotor extérieur (1) et comportant un corps de refroidissement (3) thermoconducteur relié à la bride (2) de façon à conduire la chaleur, qui entoure au moins 10 %, de préférence 40 à 60 % de la périphérie du rotor extérieur (1) en formant une fente d'aération (4) dotée d'une ouverture d'admission (10) et d'une ouverture d'évacuation (11), de telle sorte que l'air (12 ; 13) transporté de la périphérie du rotor extérieur en rotation (1) à travers l'ouverture d'admission (10), la fente d'aération (4) et l'ouverture d'évacuation (11) en fonctionnement conduit la chaleur provenant du corps de refroidissement (3) et, par le biais de celui-ci de la bride (2) et du stator intérieur (17).

15. Moteur à induit extérieur selon la revendication 14, dans lequel la fente d'aération (4) formée entre le rotor extérieur (1) et le corps de refroidissement (3) présente au moins sur toute une zone périphérique une valeur constante.

16. Moteur à induit extérieur selon la revendication 14 ou 15, dans lequel cette fente d'aération (4) s'élargit dans la zone de son ouverture d'admission (10) et/ou de son ouverture d'évacuation (11) dans la direction périphérique.

17. Moteur à induit extérieur comportant un stator intérieur (17) fixé de façon à conduire la chaleur à une bride thermoconductrice (2), comportant en outre un rotor extérieur (1) et comportant un corps de refroidissement (3) thermoconducteur relié à la bride (2) de façon à conduire la chaleur, qui s'étend pour l'essentiel sur toute l'étendue axiale de la périphérie du rotor extérieur (1), mais seulement sur une partie de l'étendue circonférentielle de cette périphérie, en formant une fente d'aération (4), de telle sorte que l'air (12 ; 13) transporté à travers la périphérie en rotation du rotor extérieur en rotation (1) depuis une admission (10) aménagée entre la périphérie du rotor extérieur (1) et le corps de refroidissement (3) à travers cette fente d'aération (4) vers une évacuation (11) aménagée entre la périphérie du rotor extérieur (1) et le corps de refroidissement (3) conduit la chaleur provenant du corps de refroidissement (3) et, par le biais de celui-ci de la bride (2) et du stator intérieur (17).

18. Moteur à induit extérieur selon une ou plusieurs des revendications 14 à 17, dans lequel le côté du corps de refroidissement (3) orienté vers la fente d'aération (4) est pourvu de canaux s'étendant pour l'essentiel dans la direction périphérique.

19. Moteur à induit extérieur selon une ou plusieurs des revendications 14 à 18, dans lequel la périphérie du rotor extérieur (1) est pour l'essentiel conçue de façon lisse.

20. Moteur à induit extérieur selon une ou plusieurs des revendications précédentes, lequel est conçu sous forme d'un moteur à commutation électronique, son rotor extérieur (1) comportant à cet égard une cloche d'induit et une unité à aimant permanent fixée sur sa face interne.

21. Moteur à induit extérieur selon la revendication 20, dans lequel la cloche d'induit du rotor extérieur (1) est conçue sous forme d'une pièce emboutie comportant une périphérie pour l'essentiel plane et lisse, et dans lequel le corps de refroidissement (3) s'étend pour l'essentiel parallèlement à cette périphérie et est séparé de celle-ci par une petite fente d'aération (4).

22. Moteur à induit extérieur selon une ou plusieurs des revendications 14 à 21, dans lequel l'admission ou l'ouverture d'admission (10) est conçue de telle sorte qu'une entrée de l'air (12) dans la fente d'aération (4) formée entre le corps de refroidissement (3) et le rotor extérieur (1) est possible à peu près tangentiellement à la périphérie du rotor extérieur (1) et (en rotation) dans sa direction périphérique.

23. Moteur à induit extérieur selon une ou plusieurs des revendications 14 à 22, dans lequel l'évacuation ou l'ouverture d'évacuation (11) est conçue de telle sorte qu'une sortie de l'air (13) sortant de la fente d'aération (4) formée entre le corps de refroidissement (3) et le rotor extérieur (1) est possible à peu près tangentiellement à la périphérie du rotor extérieur (1) et (en rotation) dans sa direction périphérique.
